Europäisches Patentamt

European Patent Office

Office européen des brevets

(11) Publication number: **0 439 870 B1**

# EUROPEAN PATENT SPECIFICATION

(45) Date of publication of patent specification: **05.04.95** (51) Int. Cl.6: **B29C 45/00**, B29C 43/00

(21) Application number: **90203516.1**

(22) Date of filing: **28.12.90**

(54) **Method for the manufacture of carriers for optically readable information from polycarbonate.**

(30) Priority: **03.01.90 NL 9000006**

(43) Date of publication of application:
**07.08.91 Bulletin 91/32**

(45) Publication of the grant of the patent:
**05.04.95 Bulletin 95/14**

(84) Designated Contracting States:
**AT BE CH DE DK ES FR GB GR IT LI NL SE**

(56) References cited:
**EP-A- 0 293 769**
**EP-A- 0 303 086**
**FR-A- 2 555 935**
**US-A- 4 125 187**

**JAPANESE PATENT GAZETTE, week B717,
section Ch, class A, accession no. 87-120086
[17], Derwent Publications Ltd, London, GB;
& JP-A-62 064 860 (TEIJIN CHEMICALS K.K.)
23-03-1987**

**JAPANESE PATENT GAZETTE, week 8108,
section Ch, class A, accession no.
81-12491D [08], Derwent Publications Ltd,
London, GB; &JP-A-55 160 051 (TEIJIN
CHEMICALS K.K.) 13-12-1980**

(73) Proprietor: **DSM N.V.**
**Het Overloon 1**
**NL-6411 TE Heerlen (NL)**

(72) Inventor: **Frencken, Eduard Jozef**
**van Oldenbarneveldstraat 22**
**NL-6181 BD Stein (L) (NL)**
Inventor: **Flinsenberg, Martin Joseph Peter**
**Gelrestraat 23**
**NL-6151 JA Sittard (NL)**

**Description**

The invention relates to a method for the manufacture of carriers for optically readable information, such as audio and videodiscs from polycarbonate by injection moulding and/or compression moulding. Such a method is known from EP-A-0303086. In EP-A-0303086, the injection moulding of said carriers on the basis of polycarbonate granulate is described.

An optically readable information carrier may consist of a plastic disc, made from polycarbonate, one of whose parallel surfaces is provided with optically readable information in the form of a surface structure track of pits. The dimensions of these pits as well as the distances between them usually are of the order of magnitude of 1 to 2 micrometer. The optically readable information is covered by an internally reflecting mirroring layer, for instance an aluminium or silver layer, such that a laser beam entering the information carrier through the other surface reaches, after a certain path, depending on the carrier's thickness, the structure track, scans this track, and is then reflected by the mirroring layer. The reflected beam, as it were converted into an intermittent light beam due to the presence of pits, forms a signal for further processing into images and/or sound. Suitable carriers should preferably be free of double refraction caused by molecular orientation and should be of uniform thickness in all directions.

As the carrier material has a stronger tendency to cause double refraction of a light beam, and as its surface structure is more irregular, the suitability of the reflected beam of being processed as a signal decreases. Double refraction, the phenomenon of a light beam with a certain wavelength being split into two components with a different refractive index when it enters a medium, strongly decreases the suitability of the reflected beam for conversion into images and/or sound. The degree to which this suitability decreases is determined also by the thickness of the carrier material, or the length of the path to be traversed by the beam after refraction by the carrier material. Irregularities in the thickness as may have been created during the manufacture of the disc material therefore also have a negative effect on the quality of the images and/or sound. The same holds for entrapped contaminations, which also affect the reflected beam. A practical requirement that may be imposed on carriers of optically readable information is that the optical path length difference, represented by @ n x d, is less than 50 nanometer, preferably less than 25 nanometer, @ n being the difference in refractive index of the light components and d the thickness of the carrier, expressed in nanometer. Further requirements are that for stiffness reasons the polycarbonate carrier has a thickness between 1.0 and 1.3 mm. For a compact disc the thickness preferably is between 1.05 and 1.15 mm, and for standardization reasons the thickness is about 1.1 mm.

For the manufacture of compact discs and videodiscs by, for instance, the injection moulding process, use is made of polycarbonate with a relatively low molecular weight. The polycarbonate should also have a low viscosity level to ensure compact discs or videodiscs are obtained that have a low level of double refraction, so that optimum information transfer via the laser beam is guaranteed. All this can be realized only when the material temperature during manufacture is relatively high, e.g. up to 360°C, and when the polycarbonate has a low molecular weight. Several patent applications describe a method to meet the above requirements by improvement of the thermal stability of the polycarbonate, to which end stabilizers are added (see e.g. JP-A-62064860).

One of the main problems, in spite of the thermal stabilization, is the occurrence of small black specks in the compact discs made, which leads to a high percentage of rejects. These black specks are caused by carbonized polycarbonate particles formed from the polycarbonate powder during compounding of the polycarbonate granulate. To prevent the occurrence of these black specks and to remove them, special stabilization systems and filters are required in the polycarbonate melt just before the extruder head. Nevertheless, the percentage of granulate and compact discs that is rejected remains substantial.

Black specks prevention is a problem not only for carriers of optically readable information. It is a general problem encountered in the manufacture of objects from polycarbonate, often causing a high percentage of rejects.

The applicant has now found that the above problems can largely be prevented by using polycarbonate powder, preferably polycarbonate powder having a high bulk density, for the manufacture of carriers for optically readable information, such as audio and videodiscs by, for instance, the injection moulding process. In Kunststoffe 77 (1987), 1 pp. 21-26, other methods are described to prevent the above mentioned problems. However, all manufacturing methods for optical discs use polycarbonate granulate as starting material. In JP-A-55160051, a coloured polycarbonate powder, suitable for moulding objects, is described. The powder is used to obtain products with an even and clear colour and cannot be used in the fabrication of carriers for optically readable information. Moreover no indication is given that the use of powder in the moulding process yields compact discs substantially free of dark specks.

Polycarbonate powders that are suitable for the method of the invention are polycarbonate powders with a bulk density of 200-900 kg/m$^3$. Very suitable are powders having a bulk density of 400-700 kg/m$^3$, this bulk density being comparable to that of granulate. In addition, these powders have a higher thermal stability since not a single thermal treatment has yet taken place, rendering addition of stabilizers virtually superfluous. A content below or equal to 0.05 wt. % is sufficient, while lower contents may also be used. Thermal stabilizers often employed for this purpose are organic phosphorus compounds, which, however, have the disadvantage that in the long run the hydrolysis stability of the final product deteriorates.

The present invention also eliminates this advantage.

Aromatic polycarbonates may, inter alia, be prepared in the customary manner by conversion of a bivalent phenol with a carbonate pre-product according to an interface polymerization process. Examples of some bivalent phenols that can be used are:

4,4'-dihydroxybiphenyl,

2,2-bis(4-hydroxyphenyl)propane (bisphenol A),

2,2-bis(4-hydroxy-3-methylphenyl)propane,

2,2-bis-(3-chloro-4-hydroxyphenyl)propane,

2,2-bis-(3,5-dimethyl-4-hydroxyphenyl)propane,

2,4-bis-(4-hydroxyphenyl)-2-methylbutane,

2,4-bis(3,5-dimethyl-4-hydroxyphenyl)-2-methylbutane,

4,4-bis(4-hydroxyphenyl)heptane,

bis-(3,5-dimethyl-4-hydroxyphenyl)-methane,

1,1-bis-(4-hydroxyphenyl)-cyclohexane,

1,1-bis-(3,5-dimethyl-4-hydroxyphenyl)-cyclohexane,

2,2-(3,5,3',5'-tetrachloro-4,4'-dihydroxydiphenyl)propane,

2,2-(3,5,3',5'-tetrabromo-4,4'-dihydroxydiphenyl)propane,

(3,3'-dichloro-4,4'-dihydroxyphenyl)methane,

bis-(3,5-dimethyl-4-hydroxyphenyl)sulphone,

bis-4-hydroxyphenylsulphone, bis-4-hydroxyphenylsulphide.

The carbonate pre-product may be a carbonyl halide, a halogen formiate or a carbonate ester. Examples of carbonyl halides are carbonyl chloride and carbonyl bromide. Examples of halogen formiates that can be used are bis-halogen formiates of bivalent phenols such as hydroquinone or of glycols such as ethylene glycol. Examples of carbonate esters that can be applied are diphenyl carbonate, di(chlorophenyl)-carbonate, di(bromophenyl)carbonate, di(alkylphenyl) carbonate, phenyltolyl carbonate, etc., and mixtures thereof. Though other carbonate pre-products may also be applied, the carbonyl halides are preferred, and in particular preference is given to carbonyl chloride, also known as phosgene.

The aromatic polycarbonate resins applied according to the invention can be prepared using a catalyst, an acid acceptor and a compound for controlling the molecular weight.

Examples of catalysts are tertiary amines such as triethyl amine, tripropyl amine and N,N-dimethyl aniline, quaternary ammonium compounds such as tetraethyl ammonium bromide and quaternary phosphonium compounds such as methyl triphenyl phosphonium bromide.

Examples of organic acid acceptors are pyridine, triethyl amine, dimethyl aniline, etc. Examples of inorganic acid acceptors are hydroxides, carbonates, bicarbonates and phosphates of an alkali metal or earth alkaline metal.

Examples of compounds for controlling the molecular weight are monovalent phenols such as phenol and alkyl-substituted phenols such as para-tert. butyl-phenol and further secondary amines.

Use can also be made of other additives customary in aromatic polycarbonate resins such as mould release agents, thermal stabilizers, for instance organic phosphorus compounds, as well as stabilizers against hydrolysis.

The invention will be elucidated on the basis of the following examples.

Preparation of the aromatic polycarbonate resin

300 Parts by weight of bisphenol A and 8.1 parts by weight of para-tertiary butyl-phenol were suspended in 1 l of water in a flask provided with a stirrer and a gas inlet tube. The oxygen was removed from the reaction mixture by passing nitrogen through the mixture during 20 minutes, the mixture meanwhile being stirred. Subsequently, 250 parts by weight of 43 wt. % caustic soda and 650 parts by weight of methylene chloride were added. The mixture temperature was brought at 25°C and kept at this value by cooling. In 90 minutes 160 parts by weight of phosgene were introduced. 20 Minutes after the start of phosgene introduction, another 50 parts by weight of caustic soda were added.

To the resulting solution 1 part by weight of triethyl amine was added, following which the mixture was stirred during 20 minutes. Additional methylene chloride was added to reduce the viscosity of the strongly viscous solution. The water-rich phase was separated off, and the organic phase was washed with water until no more salt was present in the organic phase. The aromatic polycarbonate resin was isolated from the solution and dried.

The aromatic polycarbonate resin had a viscosity of 1.23, measured on a 0.5 wt. % solution in methylene chloride. This corresponds to a molecular weight of approximately 17,000.

Comparative Example A:

10 Kg of the powder prepared as described above, together with 0.05 wt. % Irgafos 168 (registered trademark of Ciba-Geigy) as thermal stabilizer, was processed into granulate using a W&P-30 twin-screw extruder. The screw speed was 300 rpm, the output 15 kg/h, and the temperature settings of the extruder cylinder were between 270°C and 290°C. In the extruder head a 50-100-250-100-50 mesh screen package had been installed to filter black specks from the melt. The resulting granulate was processed into compact discs using an injection moulding machine specially developed for this purpose by Meiki, which machine is characterized by optimum residence time control and injection moulding precision. Of the compact discs made 14% was rejected upon quality inspection.

Comparative Example B:

In the same way as described in Comparative Example A, compact discs were made on the basis of granulate, the only difference being that this time a so-called melt filter, made by Fluid Dynamics and having a pore opening of 5 micron, had been installed in the extruder. This filter has been developed specially for removal of black specks from a polymer melt. Of the compact discs made 4% was rejected.

Example I:

Using the same injection moulding machine as in Comparative Example A a polycarbonate powder, prepared in the way described above, with an Irgafos 168 content of 0.05 wt. % and a bulk density of 643 kg/m$^3$ was processed into compact discs. Of the compact discs produced 1% was rejected.

Example II:

Using the same injection moulding machine as in Comparative Example A a polycarbonate powder, prepared in the way described above, with an Irgafos 168 content of 0.03 wt. %, was processed into compact discs. Of the compact discs produced 1% was rejected.

Example III:

In the same way as in Example II, polycarbonate powder with an Irgafos 168 content of 0.01% was processed into compact discs. Upon quality inspection 1% of the compact discs produced was rejected.

Test method:

Of the powder used in Examples I, II and III and of the granulates prepared in Comparative Examples A and B, the Visual Inspection Ratio (VIR) was determined as follows: 2 kg material was placed on a light box and the number of black specs was counted during 5 minutes. The VIR was defined as follows:

a = number of black speck found with d > 1 mm
b = number of black specks found with 0.05 < d < 1 mm
c = number of black specks found with d < 0.05 mm
VIR = 5xa + 2xb + c

In the same way, the number of black specks was determined in the compact discs made in Examples I, II and III and Comparative Examples A and B.

The results of the tests performed are shown in the table below.

T A B L E

| Example | VIR of starting material | VIR of compact discs | Rejected compact discs (%) |
|---|---|---|---|
| A | 8 | 10 | 14 |
| B | 3 | 4 | 4 |
| I | 0 | 1 | 1 |
| II | 0 | 1 | 1 |
| III | 0 | 2 | 1 |

## Claims

1. A process for the manufacture of carriers for optically readable information from polycarbonate by injection moulding and/or compression moulding characterised in that a polycarbonate powder is used as starting material in the moulding process.

2. A process according to claim 1, characterised in that the polycarbonate powder has a bulk density of from 200 to 900 Kg/m3.

3. A process according to claim 2, characterised in that the polycarbonate powder has a bulk density of from 400 to 700 Kg/m3.

4. A process according to any of claims 1 to 3 characterised in that the polycarbonate powder includes a thermal stabilizer, the content of which is less than 0.05 wt.-%.

## Patentansprüche

1. Verfahren zur Herstellung von Trägern für optisch lesbare Informationen aus Polycarbonat durch Spritzguß und/oder Formpressen, dadurch gekennzeichnet, daß ein Polycarbonat-Pulver als Ausgangsmaterial im Formverfahren verwendet wird.

2. Verfahren nach Anspruch 1, dadurch gekennzeichnet, daß das Polycarbonat-Pulver eine Schüttdichte von 200 bis 900 kg/m$^3$ aufweist.

3. Verfahren nach Anspruch 2, dadurch gekennzeichnet, daß das Polycarbonat-Pulver eine Schüttdichte von 400 bis 700 kg/m$^3$ aufweist.

4. Verfahren nach einem der Ansprüche 1 bis 3, dadurch gekennzeichnet, daß das Polycarbonat-Pulver einen Wärmestabilisator, dessen Gehalt weniger als 0,05 Masse-% beträgt, enthält.

## Revendications

1. Procédé pour la fabrication de supports pour une information optiquement lisible à partir de polycarbonate à l'aide d'un moulage par injection et/ou compression caractérisé en ce qu'on utilise une poudre de polycarbonate en tant que matière première dans le procédé de moulage.

2. Procédé selon la revendication 1, caractérisé en ce que la poudre de polycarbonate a une masse volumique apparente de 200 à 900 kg/m$^3$.

3. Procédé selon la revendication 2, caractérisé en ce que la poudre de polycarbonate a une masse volumique apparente de 400 à 700 kg/m$^3$.

4. Procédé selon l'une quelconque des revendications 1 à 3, caractérisé en ce que la poudre de polycarbonate comprend un stabilisant thermique, dont la teneur est inférieure à 0,05% en poids.